# EUROPÄISCHE PATENTSCHRIFT

(11) **EP 2 009 063 B1**
(45) Veröffentlichungstag und Bekanntmachung des Hinweises auf die Patenterteilung: **14.09.2011**
(21) Anmeldenummer: 07012795.6
(22) Anmeldetag: 29.06.2007
(51) Int. Cl.: C08L 101/10

(54) **Zwei- oder mehrkomponentige Vergussmasse**
Dual or multi-component joint sealing compound
Masse de compoundage à deux composants ou plus

(43) Veröffentlichungstag der Anmeldung: 31.12.2008
(73) Patentinhaber: Merz+Benteli AG, 3172 Niederwangen (CH)
(72) Erfinder: Hug, Natalie, 3063 Ittigen (CH); Burkhardt, Fritz, 3414 Oberburg (CH); Lerf, Claude, 3280 Meyriez (CH)
(74) Vertreter: Schaad, Balass, Menzl & Partner AG

(56) Entgegenhaltungen:
- EP-A- 1 191 075
- WO-A-2005/108520

## Beschreibung

Die vorliegende Erfindung betrifft eine zwei- oder mehrkomponentige Vergussmasse gemäss Anspruch 1 und die Verwendung eines zwei- oder mehrkomponentigen Systems als Vergussmasse gemäss Anspruch 11.

Vergussmassen (auch "Giessharze" genannt) sind fliessfähige Harze, die im Vergussverfahren verarbeitet werden. Dabei wird die Vergussmasse in eine vorgegebene Form gegossen und in der Folge ausgehärtet.

Aufgrund ihrer tiefen Viskosität sind Vergussmassen selbstnivellierende Systeme. Im Gegensatz zu pastösen, streichfesten Systemen müssen Vergussmassen somit vor der Härtung nicht aktiv glatt gestrichen werden. Vergussmassen erlauben es, beim Verguss enge Fugen ohne weiteres Zutun auszufüllen. Eingeschlossene Luftblasen werden beim Verguss von der Vergussmasse verdrängt.

Vergussmassen kommen in einer Vielzahl verschiedener Anwendungen zum Einsatz, etwa für den Verguss elektronischer Bauteile (wie z.B. Transformatoren, Kondensatoren, Halbleiter u.s.w.), für den Verguss offener Kontaktstelle bei Kabeln und Leitungen oder für die Herstellung von Abgüssen in entsprechenden Formen.

Man unterscheidet zwischen einkomponentigen und zwei- oder mehrkomponentigen Vergussmassen. Einkomponentige Vergussmassen sind vorgemischte Harzsysteme, deren Härtung in der Regel dadurch induziert wird, dass dem System Wärme zugeführt und/oder dass das System bei einer bestimmten Luftfeuchtigkeit exponiert wird.

Bei zwei- oder mehrkomponentigen Vergussmassen setzt die Härtung nach dem Mischen zweier miteinander reaktiver Komponenten ein. Diese Systeme sind lagerstabil und weisen gegenüber den einkomponentigen Systemen eine relativ hohe Härtungsgeschwindigkeit auf.

Herkömmliche zweikomponentige Vergussmassen basieren in erster Linie auf Polyurethanen oder Silikonen.

Polyurethan-Vergussmassen weisen eine Isocyanat enthaltende Komponente auf und eine weitere, die eine gegenüber Isocyanat reaktive Verbindung enthält. Beim Mischen der beiden Komponenten setzt die Härtung der Vergussmasse ein.

Allerdings weisen diese Vergussmassen Nachteile auf. So bilden sich in der Regel bei den zweikomponentigen Polyurethan-Vergussmassen während des Mischens der Komponenten Blasen, die die Homogenität des resultierenden Vergusses, insbesondere dessen elektronischen Isolationseigenschaften, negativ beeinträchtigen können. Zudem reagieren diese Vergusssysteme relativ empfindlich auf Mischungs- und Dosierungsfehler; ihr Toleranzbereich hinsichtlich der Mischungsverhältnisse ist relativ eng.

Polyurethan-Vergussmassen weisen weiter den Nachteil auf, dass die im ungehärteten Zustand enthaltenen Isocyanate hochgiftig sind und auf die Haut und die Atemwege stark reizend wirken. Dies bedingt, dass diese Vergussmassen kennzeichnungspflichtig sind und bei deren Anwendung besondere Schutz- und Sicherheitsmassnahmen eingehalten werden müssen. Zudem kann giftiges Isocyanat auch im ausgehärteten Verguss vorliegen, etwa dann, wenn das Verhältnis des Isocyanats zur gegenüber dem Isocyanat reaktiven Verbindung nicht korrekt gewählt wird und die Polymerisation nicht vollständig abläuft.

Die auf Silikonen basierenden Vergussmassen weisen den Nachteil auf, dass durch die Migration von im resultierenden Verguss enthaltenem Silikonöl das vergossene Werkstück und die entsprechende Produktionsumgebung vollständig verschmutzt werden können. So bildet sich in der Regel auf der Oberfläche des Vergusses ein Silikonöl-Film, welcher etwa für eine nachfolgende Lackierung des Vergusses hinsichtlich der Haftung des Lacks nachteilig ist.

Die Aufgabe der vorliegenden Erfindung liegt darin, eine lagerstabile Vergussmasse mit einer hohen Härtungsgeschwindigkeit zur Verfügung zu stellen, die zu qualitativ hochstehenden Vergüssen führt und die ohne speziellen Schutz- und Sicherheitsmassnahmen verwendet werden kann.

Die Aufgabe wird durch die in Anspruch 1 definierte Vergussmasse gelöst.

Erfindungsgemäss umfasst die Vergussmasse eine erste Komponente A und eine zweite Komponente B. Beide Komponenten enthalten mindestens ein silanterminiertes Präpolymer auf der Basis eines organischen Polymers.

Die Verwendung besagter silanterminierter Präpolymere erlaubt es, selbstnivellierende Systeme mit sehr tiefer Viskosität zu erhalten, welche als Vergussmassen verwendet werden können.

Aufgrund der Selbstnivellierung der Vergussmasse ist ein aktives Glattstreichen vor der Härtung nicht nötig. Zudem erlaubt es die erfindungsgemässe Vergussmasse, enge Fugen ohne weiteres Zutun auszufüllen. Allfällige eingeschlossene Luftblasen werden beim Verguss von der Vergussmasse verdrängt.

Im Weiteren ist die erfindungsgemässe Vergussmasse frei von Lösungsmitteln. Sie ist für Mensch und Umwelt unbedenklich und nicht kennzeichnungspflichtig.

Ausgehend von der erfindungsgemässen Vergussmasse können Vergüsse mit flammhemmenden Eigenschaften erhalten werden, was eine Anwendung dieser Vergüsse bei hohen Temperaturen erlaubt.

Die erfindungsgemässe Vergussmasse hat eine Topfzeit von 15 bis 20 Minuten bei 23°C/50%rf. Der ausgehärtete Verguss ist nach 24 Stunden klebefrei und weist eine sehr gute Beständigkeit gegenüber UV-Strahlen und anderen Umwelteinflüssen, Alterungsprozessen, Reinigungsmitteln, Treibstoffen und Ölen auf. Er weist zudem auf Metallen, Kunststoffen, Glas und anderen Substraten auch ohne eine zusätzliche Vorbehandlung mit einem Primer sehr gute Hafteigenschaften auf. Ebenso eignet er sich als Substrat für eine nachfolgende Lackierung.

Vorzugsweise handelt es sich bei den silanterminierten Präpolymeren um Verbindungen der Formel (I), 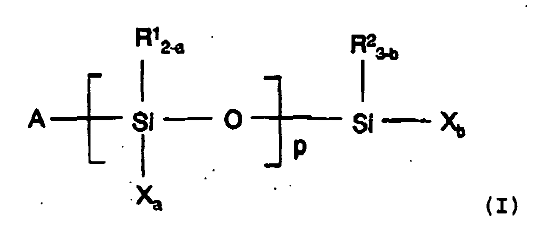 in der A einen Rest eines organischen Polymers darstellt, R¹ und R² unabhängig voneinander einen Alkylrest mit 1 bis 20 Kohlenstoffatomen, einen Cycloalkylrest mit 3 bis 20 Kohlenstoffatomen, einen Arylrest mit 6 bis 20 Kohlenstoffatomen, einen Aralkylrest mit 7 bis 20 Kohlenstoffatomen oder einen Triorganosiloxyrest darstellen,

X eine Hydroxylgruppe oder einen hydrolysierbaren Rest darstellt, und, falls zwei oder mehr Reste X vorhanden sind, diese wahlweise gleich oder voneinander verschieden sind,

a gleich 0, 1 oder 2 ist, b gleich 0, 1, 2 oder 3 ist, wobei a + b ≥ 1 ist, und gegebenenfalls a zwischen den einzelnen Gruppen der Formel (II) 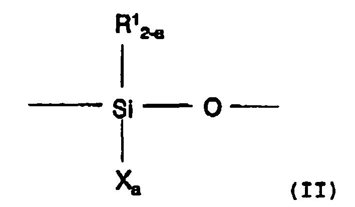 wahlweise gleich oder voneinander verschieden sind, und

p eine ganze Zahl von 0 bis 19 ist.

Beispiele für die in der erfindungsgemässen Vergussmasse verwendeten Präpolymere werden etwa in der EP-A-1090960, Absätze [0051] bis [0064], beschrieben, deren Inhalt hiermit unter Bezugnahme miteingeschlossen wird.

Beim organischen Polymer des Restes A der Formel (I) handelt es sich beispielsweise um ein Polyoxyalkylen-Copolymer, ein auf einem Kohlenwasserstoff ohne Heteroatom basierendes Polymer, ein auf einem Polyester basierendes Polymer, ein auf einem Acrylsäureester basierendes Polymer, ein durch Polymerisation eines Vinylmonomers in ein organisches Polymer erhaltenes Graft-Polymer, ein auf einem Polysulfid basierendes Polymer, ein auf einem Polyamid basierendes Polymer, ein auf einem Polycarbonat basierendes Polymer oder ein auf einem Polyurethan basierendes Polymer.

Beim Rest X der Formel (I) kann es sich beispielsweise um ein Wasserstoffatom, ein Halogenatom, einen Alkoxyrest, einen Acyloxyrest, eine Ketoximatgruppe, eine Aminogruppe, eine Amidogruppe, eine Aminoxygruppe, eine Mercaptogruppe oder eine Alkenyloxyrest handeln.

Bei den erfindungsgemäss verwendeten silanterminierten Präpolymeren handelt es sich bevorzugt um solche auf der Basis eines Polyethers, eines Polyacrylats oder eines Polyurethans.

Besonders bevorzugt sind silanterminierte Präpolymere auf der Basis von Oxyalkylenpolymeren, wie sie etwa in der US-A-3,971,751 beschrieben werden, deren Inhalt hiermit unter Bezugnahme mitaufgenommen wird. Entsprechende silanterminierte Präpolymere sind unter dem Namen MS-Polymer (Handelsname der Firma Kanekafuchi) im Handel erhältlich.

Die erste Komponente A der erfindungsgemässen Vergussmasse ist für sich alleine feuchtigkeitshärtend. Sie umfasst nebst dem silanterminierten Präpolymer mindestens ein als Vernetzer und/oder Haftvermittler wirkendes Silan.

Gegebenfalls enthält die Komponente A zudem einen Härtungskatalysator. Durch die Wahl eines geeigneten silanterminierten Präpolymers in Kombination mit einem geeigneten als Vernetzer und/oder Haftvermittler wirkenden Silan kann auf den Härtungskatalysator aber verzichtet werden.

Beispiele für als Vernetzer wirkende Silane sind etwa Aminogruppen enthaltende Silane, Mercaptogruppen enthaltende Silane, wie etwa γ-Mercaptopropyltrimethoxysilan und γ-Mercaptopropyldimethoxysilan, ungesättigte Gruppen enthaltende Silane, wie Vinyltrimethoxysilan, γ-Methacryloyloxypropyltrimethoxysilan und γ-Acryloyloxypropylmethyldimethoxysilan, Chlor enthaltende Silane, wie etwa γ-Chloropropyltrimethoxysilan, Isocyanat enhaltende Silane, wie etwa γ-Isocyanatpropyltriethoxysilan und γ-Isocyanatpropylmethyldimethoxysilan, Hydrosilane, wie etwa Methyldimethoxysilan, Trimethoxysilan und Methyldiethoxysilan, sowie Epoxygruppen enthaltende Silane. Unter diesen werden die Aminogruppen enthaltenden Silane aufgrund ihrer Haftvermittlungs- und Autokatalyseeigenschaften bevorzugt.

Beispiele für Aminogruppen enthaltende Silane beinhalten γ-Aminopropyltrimethoxysilan, γ-Aminopropyltriethoxysilan, γ-Aminopropylmethyldimethoxysilan, γ-Aminopropylmethyldiethoxysilan, N-(β-Aminoethyl)-γ-aminopropyltrimethoxysilan, N-(β-Aminoethyl)-γ-aminopropyltrimethoxysilan, N-(β-Aminoethyl)-γ-aminopropyltriethoxysilan, N-(β-Aminoethyl)-γ-aminopropylmethyldimethoxysilan, N-(β-Aminoethyl)-γ-aminopropylmethyldiethoxysilan, 1,3-Diaminoisopropyltrimethoxysilan.

Die obigen Beispiele sind in keiner Weise abschliessend. So sind insbesondere nebst den einzeln erwähnten Silanen mit der funktionellen Gruppe in Position γ auch die entsprechenden, reaktiveren Silane mit der funktionellen Gruppe in Position α (sogenannte α-Silane) mitumfasst. Beispiele hierfür sind etwa Silane, die in Position α eine Aminogruppe aufweisen, wie etwa (N-Cyclohexylaminomethyl)methyldiethoxysilan, (N-Cyclohexylaminomethyl)triethoxysilan, (N-Phenylaminomethyl)methyldimethoxysilan, (N-Phenylaminomethyl)trimethoxysilan. Ein weiteres Beispiel für die α-Silane stellt (Trimethoxysilylmethyl)-O-methylcarbamat dar.

Vinyltrimethoxysilan ist aufgrund seiner Trocknungsmitteleigenschaften bevorzugt.

Geeignete Härtungskatalysatoren sind dem Fachmann bekannt. Beispiele hierfür sind etwa Titansäureester, wie Tetrabutyltitanat, Tetrapropyltitanat, Tetraisobutyltitanat, Titantetraacetylacetonat, organische Zinnverbindungen, wie etwa Dibutylzinndilaureat, Dibutylzinnmaleat, Dibutylzinndiacetat, Dibutylzinndiacetylacetonat, Zinn(II)octoat, Zinnnaphthenat, Zinn(II)alkoxylate, Dibutylzinnalkoxylate, Di-n-butylzinnketonat, organische Aluminiumverbindungen, wie Aluminium-tris-acetylacetonat, Aluminium-trisethylacetoacetat, Dipropoxyaluminiummethylacetoacetat, Reaktionsprodukte von Bismut-tris-(2-ethylhexoat), Bismut-tris-(2-neodecanoat) oder analoge Bismutsalze mit einer organischen Carbonsäure oder einem organischen Amin, Chelatverbindungen, wie etwa Zirkoniumtetraacetylacetonat oder Titantetraacetylacetonat, organische Bleiverbindungen, wie etwa Bleioctylat, organische Eisenverbindungen, wie etwa Eisennaphthenat, oder AminoVerbindungen, wie etwa Morpholin, N-Methylmorpholin, 2-Ethyl-2-methylimidazol, 1,8-Diazabicyclo(5.4.0)undecen-7 (DBU), ein Carbonsäuresalz dieser Amine oder langkettige aliphatische Amine.

Die Komponente B umfasst nebst dem silanterminierten Präpolymer Wasser, welches unter Abspaltung eines hydrolisierbaren Restes der Silylgruppe die Silanolkondensation induziert, sie ist aber für sich alleine bei einem pH von 3 bis 7 überraschenderweise nicht reaktiv und somit lagerstabil. Zusätzliche stabilisierende Massnahmen, die die Fliessfähigkeit der Komponente B negativ beeinträchtigen könnten, entfallen somit. Es besteht erfindungsgemäss somit keine Notwendigkeit, zur Komponente B eine Wasser adsorbierende Substanz hinzuzufügen, wie dies etwa in der WO2005/108520 vorgeschlagen wird.

Bevorzugt liegt der pH-Wert der Komponente B in einem Bereich von 6 bis 7, bevorzugter bei ungefähr 7.

Im Gegensatz zu den herkömmlichen, auf silanterminierten Präpolymeren basierenden einkomponentigen Systemen, härtet das Vergusssystem der vorliegenden Erfindung auch in Abwesenheit von Luftfeuchtigkeit aus. Im Vergleich zu der allein durch Luftfeuchtigkeit induzierten Härtung der Komponente A, erfolgt die durch Mischen der beiden Komponenten A und B induzierte Härtung wesentlich schneller.

Das in Komponente B enthaltene silanterminierte Präpolymer kann mit dem in Komponente A enthaltenen silanterminierten Präpolymer identisch sein oder sich von diesem unterscheiden. Bevorzugt liegen in Komponente A mindestens zwei verschiedene silanterminierte Präpolymere vor.

Gemäss einer bevorzugten Ausführungsform enthält die Komponente A zusätzlich zu den in Anspruch 1 aufgeführten Bestandteilen einen oder mehrere Füllstoffe, einen oder mehrere Weichmacher, ein oder mehrere Trocknungsmittel, einen oder mehrere Rheologiehilfsstoffe und/oder ein oder mehrere Farbpigmente.

Bevorzugte Trocknungsmittel stellen etwa die dem Fachmann bekannten Trocknungssilane, wie beispielsweise Vinyltrimethoxysilan (VTMO), dar.

Als Rheologiehilfsstoff können beispielsweise Rizinusölderivate, modifizierte Schichtsilikate, hochdisperse Kieselsäuren, Bentone, Harnstoffderivate oder Wachse verwendet werden.

Gemäss einer bevorzugten Ausführungsform enthält auch die Komponente B einen oder mehrere Füllstoffe, einen oder mehrere Weichmacher und/oder ein oder mehrere Farbpigmente.

Als Füllstoff, wie er in den Komponenten A und B vorzugsweise enthalten ist, können alle gängigen Füllstoffe eingesetzt werden. Ein Beispiel für einen geeigneten Füllstoff stellt etwa Kreide (Calciumcarbonat) dar. Besonders bevorzugt wird als Füllstoff Aluminiumhydroxid (Aluminiumtrihydrat) verwendet, da dieses flammhemmende Eigenschaften aufweist und der resultierende Verguss somit Anwendungen bei hohen Temperaturen erlaubt.

Im Allgemeinen ist der in der Komponente B enthaltene Füllstoff alkalisch. In diesem Fall wird der pH-Wert mit einer Säure auf den erfindungsgemässen pH-Wert im Bereich von 3 bis 7, bevorzugt bei 6 bis 7, am meisten bevorzugt bei ungefähr 7 eingestellt. Bei der Säure handelt es sich bevorzugt um eine Carbonsäure, wie Ameisensäure oder Essigsäure. Bevorzugt wird Essigsäure (99 bis 100%) verwendet.

Als Weichmacher wird vorzugsweise ein flammhemmender Weichmacher eingesetzt, wie etwa der unter der Handelsbezeichnung Disflamoll® (Lanxess) erhältliche Weichmacher. Dies erlaubt es zusätzlich, dass der resultierenden Verguss hohen Temperaturen standhält.

Wird eine weisse Vergussmasse angestrebt, so kann beispielsweise Titandioxid als Weisspigment verwendet werden.

In den bevorzugten Ausführungsformen, in denen die Komponente A einen Füllstoff und einen Weichmacher enthält, ist das Gewichtsverhältnis silanterminiertes Präpolymer : Füllstoff : Weichmacher bevorzugt 10-60 : 20-50 : 0-40, bevorzugter 30-50 : 30-40 : 0-10. Dadurch kann je nach der Wahl der einzelnen Bestandteile der Komponente A eine optimale Fliessfähigkeit des Systems erreicht werden.

Die zwei- oder mehrkomponentige Vergussmasse der vorliegenden Erfindung kann für eine Vielzahl von Anwendung eingesetzt werden. So kann sie etwa als Vergussmasse für die mechanische Fixierung von elektronischen Bauteilen, zur elektrischen Isolierung, zum Korrosionsschutz oder zur Verringerung der Empfindlichkeit gegenüber mechanischen Belastungen, wie beispielsweise Vibrationen, Schlag-Stoss-Kräften und Zugkräften, verwendet werden.

Für bestimmte Anwendungen ist die Vergussmasse vorzugsweise derart zusammengesetzt, dass der resultierende Verguss nicht transparent ist. Dies kann etwa dann erwünscht sein, wenn ein elektronisches Bauteil aus Gründen des Kopierschutzes nicht sichtbar im Verguss eingegossen werden soll. Da das Bauteil nicht zerstörungsfrei aus dem Verguss entnommen werden kann, ist es somit für Dritte nicht zugänglich.

Die Viskosität der Komponenten A und B kann innerhalb der Grenzen, die durch die für Vergussmassen erforderliche tiefe Viskosität gesetzt werden, durch die Wahl eines geeigneten Füllstoffs und dessen Anteil in der jeweiligen Komponente beliebig variiert werden.

Im Allgemeinen wird die Vergussmasse der vorliegenden Erfindung in einem Verfahren hergestellt, umfassend für die Komponente A die aufeinanderfolgenden Schritte, dass
a1) mindestens eine silanterminiertes Präpolymer auf der Basis eines organischen Polymers wahlweise mit einem Trocknungsmittel, einem Rheologiehilfsstoff und/oder einem Füllstoff vorgelegt wird,
a2) mindestens ein als Vernetzer und/oder Haftvermittler wirkendes Silan hinzugefügt wird und
a3) mindestens ein Haftkatalysator hinzugefügt wird,
   und für Komponente B die aufeinanderfolgenden Schritte, dass
b1) mindestens eine silanterminiertes Präpolymer auf der Basis eines organischen Polymers wahlweise mit einem Weichmacher, einem Farbpigment und/oder einem Füllstoff vorgelegt wird,
b2) Wasser wahlweise mit einer Säure hinzugefügt wird, wobei der pH-Wert der Komponente B auf einen Wert im Bereich von 3 bis 7, vorzugsweise von 6 bis 7, bevorzugt bei ungefähr 7 eingestellt wird.

Bevorzugt wird für Komponente A zwischen den Schritten a1 und a2 in einem separaten Schritt ein Trocknungsmittel wirkendes Silan, wie beispielsweise Vinyltrimethoxysilan (VTMO), hinzugefügt.

Für Komponente B wird zwischen den Schritten b1 und b2 bevorzugt in einem separaten Schritt eine Mischung aus einem Rheologiehilfsstoff und einem Weichmacher hinzugefügt.

In Schritt b2 wird insbesondere dann eine Säure zugesetzt, wenn für die Komponente B ein alkalischer Füllstoff verwendet wird.

Die beiden Komponenten der erfindungsgemässen Vergussmasse können in jeder denkbaren Mischvorrichtung hergestellt werden. Bevorzugt erfolgt die Herstellung in einem evakuierbaren Mischaggregat, wodurch Gaseinschlüsse vollständig verhindert werden können. Besonders bevorzugt erfolgt die Herstellung in einem Butterfly-Dissolver, der dem Fachmann bekannt ist.

Zur Mischung der beiden Komponenten A und B miteinander kann etwa eine sogenannte "Side-by-side"-Kartusche, ein Hobbock oder ein Fass, die mit einem Statikmischer ausgestattet sind, verwendet werden.

### BEISPIELE

### Herstellung der Komponente A:

2200 g eines silanterminierten Präpolymers auf der Basis eines Polyethers (z.B. Kaneka S203H) werden mit 1575 g eines Füllstoffs (Aluminiumtrihydrat) während drei Minuten gemischt, abgespachtelt und während weiterer drei Minuten unter Vakuum weitergemischt. 81 g des als Vernetzer und Trocknungsmittel wirkenden Vinyltrimethoxysilan (VTMO) wird hinzugefügt und die resultierende Mischung wird während zehn Minuten unter Vakuum weitergemischt.

Daraufhin werden 157 g eines Aminosilans (z.B. 2-(Aminoethyl)-3-aminopropyltrimethoxysilan) zur Mischung hinzugefügt und die resultierende Mischung während weiterer drei Minuten unter Vakuum gemischt. Schliesslich wird ein Härtungskatalysator (z.B. Metatin® 740; Acima) hinzugefügt und das Gemisch unter Vakuum während weiterer vier Minuten gemischt, abgespachtelt und dann während weiterer sechs Minuten gemischt.

### Herstellung der Komponente B

750 g eines silanterminierten Präpolymers (z.B. Kaneka MS S303H) wird mit 500 g eines Weichmachers (Disflamoll®; Lanxess), 180 g eines Farbpigments (z.B. Titandioxid) und 1900 g eines Füllstoffs (Aluminiumtrihydrat) während drei Minuten gemischt, abgespachtelt und während weiterer drei Minuten unter Vakuum gemischt.

Daraufhin werden 500 g des Weichmachers (Disflamoll®, Lanxess) hinzugefügt und während weiterer drei Minuten unter Vakuum eingemischt. Danach werden 150 g Wasser und 5 g Essigsäure (99-100%) zur Mischung hinzugefügt und unter Vakuum während vier Minuten eingemischt, abgespachtelt und weitere sechs Minuten unter Vakuum gemischt.

## Patentansprüche

1. Zwei- oder mehrkomponentige, selbstnivellierende Vergussmasse umfassend
a) eine erste Komponente A enthaltend
ein silanterminiertes Präpolymer auf der Basis eines organischen Polymers und
ein als Vernetzer und/oder Haftvermittler wirkendes Silan sowie
b) eine zweite Komponente B enthaltend
ein silanterminiertes Präpolymer auf der Basis eines organischen Polymers und
Wasser,
wobei der pH-Wert der Komponente B in einem Bereich von 3 bis 7 liegt.

2. Vergussmasse nach Anspruch 1, wobei das silanterminierte Präpolymer eine Verbindung der Formel (I) ist 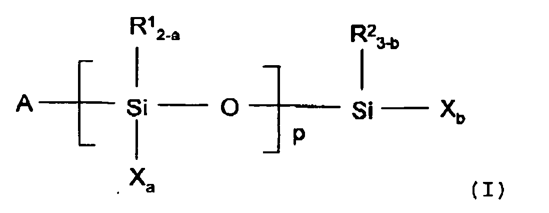 in der A einen Rest eines organischen Polymers darstellt,
R¹ und R² unabhängig voneinander einen Alkylrest mit 1 bis 20 Kohlenstoffatomen, einen Cycloalkylrest mit 3 bis 20 Kohlenstoffatomen, einen Arylrest mit 6 bis 20 Kohlenstoffatomen, einen Aralkylrest mit 7 bis 20 Kohlenstoffatomen oder einen Triorganosiloxyrest darstellen,
X eine Hydroxylgruppe oder einen hydrolysierbaren Rest darstellt, und, falls zwei oder mehr Reste X vorhanden sind, diese wahlweise gleich oder voneinander verschieden sind,
a gleich 0, 1 oder 2 ist, b gleich 0, 1, 2 oder 3 ist, wobei a + b ≥ 1 ist, und gegebenenfalls a zwischen den einzelnen Gruppen der Formel (II) 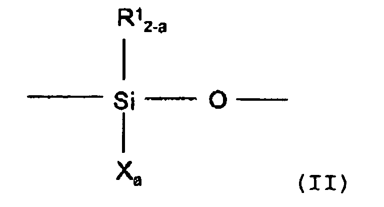 wahlweise gleich oder voneinander verschieden sind, und
p eine ganze Zahl von 0 bis 19 ist.

3. Vergussmasse nach Anspruch 1 oder 2, wobei die Komponente A zusätzlich einen Härtungskatalysator enthält.

4. Vergussmasse nach einem der Ansprüche 1 bis 3, wobei die Komponente A zusätzlich einen Füllstoff, einen Weichmacher, ein Trocknungsmittel, einen Rheologiehilfsstoff und/oder ein Farbpigment enthält.

5. Vergussmasse nach Anspruch 4, wobei das Trocknungsmittel ein Silan ist.

6. Vergussmasse nach einem der vorhergehenden Ansprüche, wobei die Komponente B zusätzlich einen Füllstoff, einen Weichmacher und/oder ein Farbpigment enthält.

7. Vergussmasse nach Anspruch 4 bis 6, wobei der Füllstoff Aluminiumhydroxid ist.

8. Vergussmasse nach einem der Ansprüche 4 bis 7, wobei mindestens eine der Komponenten A und B einen flammhemmenden Weichmacher enthält.

9. Vergussmasse nach einem der Ansprüche 4 bis 8, wobei in Komponente A das Gewichtsverhältnis silanterminiertes Präpolymer : Füllstoff : Weichmacher 10-60 : 20-50 : 0-40 ist.

10. Vergussmasse nach einem der Ansprüche 6 bis 9, wobei Komponente B zusätzlich zu einem alkalischen Füllstoff weiter eine Säure enthält.

11. Verwendung eines zwei- oder mehrkomponentigen Systems umfassend
a) eine erste Komponente A enthaltend
ein silanterminiertes Präpolymer auf der Basis eines organischen Polymers und
ein als Vernetzer und/oder Haftvermittler wirkendes Silan sowie
b) eine zweite Komponente B enthaltend ein silanterminiertes Präpolymer auf der Basis eines organischen Polymers und
Wasser,
wobei der pH-Wert der Komponente B in einem Bereich von 3 bis 7 liegt,
als selbstnivellierende Vergussmasse.

## Claims

1. Two- or multicomponent, self-levelling casting composition encompassing
a) a first component A comprising
a silane-terminated prepolymer based on an organic polymer and
a silane acting as crosslinking agent and/or as coupling agent, and
b) a second component B comprising
a silane-terminated prepolymer based on an organic polymer and
water,
where the pH of component B is in the range from 3 to 7.

2. Casting composition according to Claim 1, where the silane-terminated prepolymer is a compound of the formula (I) 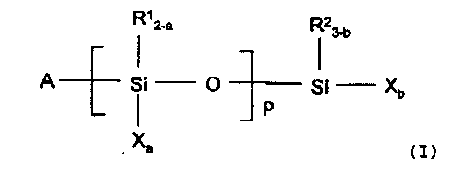 in which A is a moiety of an organic polymer,
R¹ and R² are mutually independently an alkyl moiety having from 1 to 20 carbon atoms, a cycloalkyl moiety having from 3 to 20 carbon atoms, an aryl moiety having from 6 to 20 carbon atoms, an aralkyl moiety having from 7 to 20 carbon atoms or a triorganosiloxy moiety,
X is a hydroxy group or a hydrolysable moiety and, if two or more moieties X are present, these are optionally identical or different from one another,
a is 0, 1 or 2, b is 0, 1, 2 or 3, where a + b ≥ 1, and, if appropriate, between the individual groups of the formula (II) 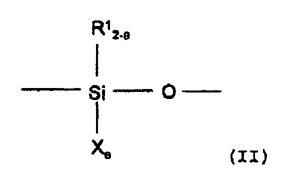 the meanings of a are optionally identical or different from one another, and
p is an integer from 0 to 19.

3. Casting composition according to Claim 1 or 2, where component A also comprises a curing catalyst.

4. Casting composition according to any of Claims 1 to 3, where component A also comprises a filler, a plasticizer, a desiccant, a rheology aid and/or a colour pigment.

5. Casting composition according to Claim 4, where the desiccant is a silane.

6. Casting composition according to any of the preceding claims, where component B also comprises a filler, a plasticizer and/or a colour pigment.

7. Casting composition according to any of Claims 4 to 6, where the filler is aluminium hydroxide.

8. Casting composition according to any of Claims 4 to 7, where at least one of components A and B comprises a flame-retardant plasticizer.

9. Casting composition according to any of Claims 4 to 8, where, in component A, the ratio by weight of silane-terminated prepolymer to filler to plasticizer is from 10 to 60 : from 20 to 50 : from 0 to 40.

10. Casting composition according to any of Claims 6 to 9, where component B also comprises an acid in addition to an alkaline filler.

11. Use of a two- or multicomponent system encompassing
a) a first component A comprising
a silane-terminated prepolymer based on an organic polymer and
a silane acting as crosslinking agent and/or as coupling agent, and
b) a second component B comprising
a silane-terminated prepolymer based on an organic polymer and
water,
where the pH of component B is in the range from 3 to 7,
as self-levelling casting composition.

## Revendications

1. Masse de coulage autonivelante, à deux composants ou plus, comprenant
a) un premier composant A, contenant
un prépolymère terminé par silane à base d'un polymère organique et
un silane agissant comme réticulant et/ou promoteur d'adhérence, ainsi que
b) un deuxième composant B, contenant
un prépolymère terminé par silane à base d'un polymère organique et
de l'eau,
le pH du composant B se trouvant dans la plage de 3 à 7.

2. Masse de coulage selon la revendication 1, où le prépolymère terminé par silane est un composé de formule (I) 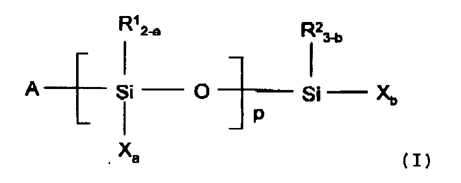 dans laquelle A représente un radical d'un polymère organique,
R1 et R2 représentent, indépendamment l'un de l'autre, un radical alkyle comprenant 1 à 20 atomes de carbone, un radical cycloalkyle comprenant 3 à 20 atomes de carbone, un radical aryle comprenant 6 à 20 atomes de carbone, un radical aralkyle comprenant 7 à 20 atomes de carbone ou un radical triorganosiloxy,
X représente un groupe hydroxyle ou un radical hydrolysable, et, si deux radicaux X ou plus sont présents, ceux-ci sont, au choix, identiques ou différents les uns des autres,
a vaut 0, 1 ou 2, b vaut 0, 1, 2 ou 3, où a + b ≥ 1, et le cas échéant les indices a des différents groupes de formule (II) 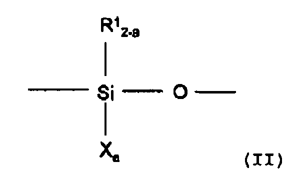 sont, au choix, identiques ou différents les uns des autres et
p vaut un nombre entier de 0 à 19.

3. Masse de coulage selon la revendication 1 ou 2, où le composant A contient en outre un catalyseur de durcissement.

4. Masse de coulage selon l'une quelconque des revendications 1 à 3, où le composant A contient en outre une charge, un plastifiant, un dessiccateur, un adjuvant de rhéologie et/ou un pigment colorant.

5. Masse de coulage selon la revendication 4, où le dessiccateur est un silane.

6. Masse de coulage selon l'une quelconque des revendications précédentes, où le composant B contient en outre une charge, un plastifiant et/ou un pigment colorant.

7. Masse de coulage selon la revendication 4 à 6, où la charge est de l'hydroxyde d'aluminium.

8. Masse de coulage selon l'une quelconque des revendications 4 à 7, où au moins un des composants A et B contient un plastifiant ignifuge.

9. Masse de coulage selon l'une quelconque des revendications 4 à 8, où, dans le composant A, le rapport pondéral prépolymère terminé par silane:charge:plastifiant est de 10-60 : 20-50 : 0-40.

10. Masse de coulage selon l'une quelconque des revendications 6 à 9, où le composant B contient, en plus d'une charge alcaline, en outre un acide.

11. Utilisation d'un système à deux composants ou plus, comprenant
a) un premier composant A, contenant
un prépolymère terminé par silane à base d'un polymère organique et
un silane agissant comme réticulant et/ou promoteur d'adhérence, ainsi que
b) un deuxième composant B, contenant
un prépolymère terminé par silane à base d'un polymère organique et
de l'eau,
le pH du composant B se trouvant dans la plage de 3 à 7,
comme masse de coulage autonivelante.
